Europäisches Patentamt

European Patent Office

Office européen des brevets

(11) Publication number: **0 265 195**
**A2**

# EUROPEAN PATENT APPLICATION

(21) Application number: **87309192.0**

(22) Date of filing: **19.10.87**

(51) Int. Cl.⁴: **H 02 K 37/12**

(30) Priority: **22.10.86 GB 8625269**

(43) Date of publication of application:
**27.04.88 Bulletin 88/17**

(84) Designated Contracting States:
**CH DE FR GR IT LI**

(71) Applicant: **The General Electric Company, p.l.c.**
**1 Stanhope Gate**
**London W1A 1EH (GB)**

(72) Inventor: **Joyce, Timothy Robert**
**Sycamores Yarnfield Lane**
**Yarnfield Stone (GB)**

(74) Representative: **Pope, Michael Bertram Wingate**
**Central Patent Department Wembley Office The General**
**Electric Company, p.l.c. Hirst Research Centre East Lane**
**Wembley Middlesex HA9 7PP (GB)**

(54) **Electric motors.**

(57) An electric stepper motor of the kind having a cylindrical permanently magnetised rotor (1) providing equally angularly spaced poles of successively opposite polarity around its circumference and a stator (19) providing pole pieces (35, 37) around the rotor at corresponding angular spacings and arranged for energisation by an electric current so that the stator pole pieces are magnetised with successively opposite polarity. The surfaces of the pole pieces (35, 37) facing the rotor (1) are skewed so that the spacing between the rotor and the facing surface of each pole piece increases in a given direction around the rotor axis, thereby to ensure that the rotor rotates in a predetermined direction each time the direction of the stator energisation current is reversed.

Fig.1.

EP 0 265 195 A2

## Description

### Electric Motors

This invention relates to electric motors.

More particularly the invention relates to electric stepper motors of the kind comprising a cylindrical rotor mounted for rotation about its axis and permanently magnetised to provide equally angularly spaced magnetic poles around said axis of successively opposite polarity, and a stator providing pole pieces around the rotor at angular spacings corresponding to the angular spacings of said rotor poles, and arranged for energisation by an electric current so that the stator pole pieces are magnetised with successively opposite polarity. Such a motor is hereafter referred to as an electric motor of the kind specified.

In operation of an electric motor of the kind specified the rotor is required to rotate in a predetermined direction through an angle equal to the pole pitch each time the direction of the stator energisation current is reversed.

In known motors of the kind specified rotation of the rotor in a predetermined direction only is obtained by means of an auxiliary stator pole arrangement, as described for example in GB-A-1035550 and GB 1420030.

It is an object of the present invention to provide an electric motor of the kind specified wherein rotation of the rotor in a predetermined direction only is obtained in novel manner.

According to the present invention in an electric motor of the kind specified each said stator pole piece has a surface facing the rotor whose spacing from the rotor increases along said surface in a given direction around the rotor axis.

In a preferred embodiment of the invention each said pole piece has a planar surface facing the rotor which surface lies wholly on one side of and is substantially normal to a respective plane including the axis of the rotor.

In a motor according to the invention said stator suitably comprises an electromagnet which provides, when energised, magnetic poles of opposite polarity at spaced positions along an extension of the axis of the rotor, and a pair of pole piece members respectively associated with said poles provided by the electromagnet, each said member providing a plurality of poles pieces extending axially alongside the rotor at equally angularly spaced positions with the pole pieces of one member interdigitated with the pole pieces of the other member.

One electric motor in accordance with the invention will now be described, by way of example, with reference to the accompanying drawings in which:-

Figure 1 is an exploded perspective view of the motor and parts of a cyclometer register driven by the motor.

Figure 2 is a sectional view of the motor and the register parts.

Figure 3 illustrates the construction of stator pole pieces incorporated in the motor; and

Figure 4 illustrates a feature of the construction of the motor.

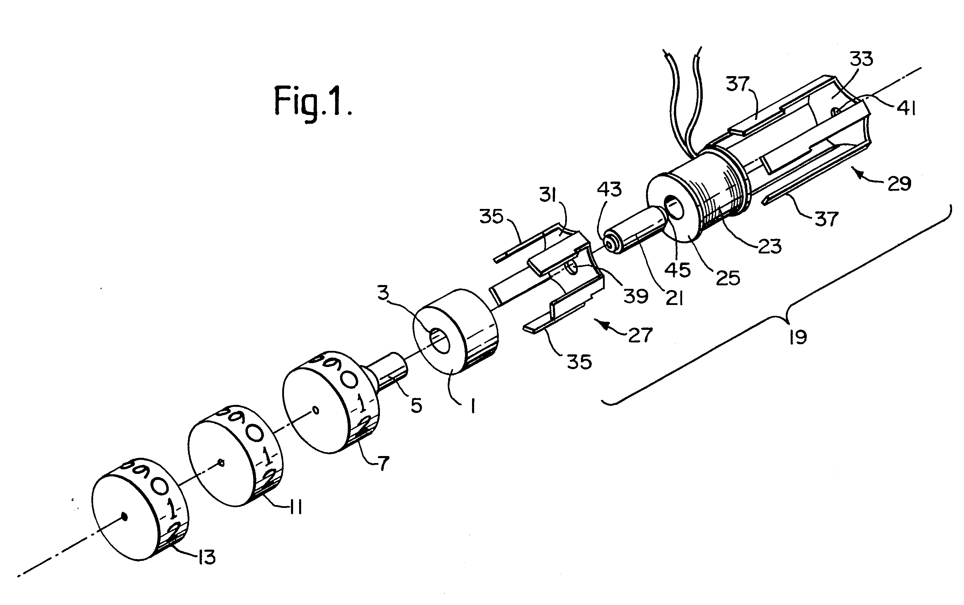

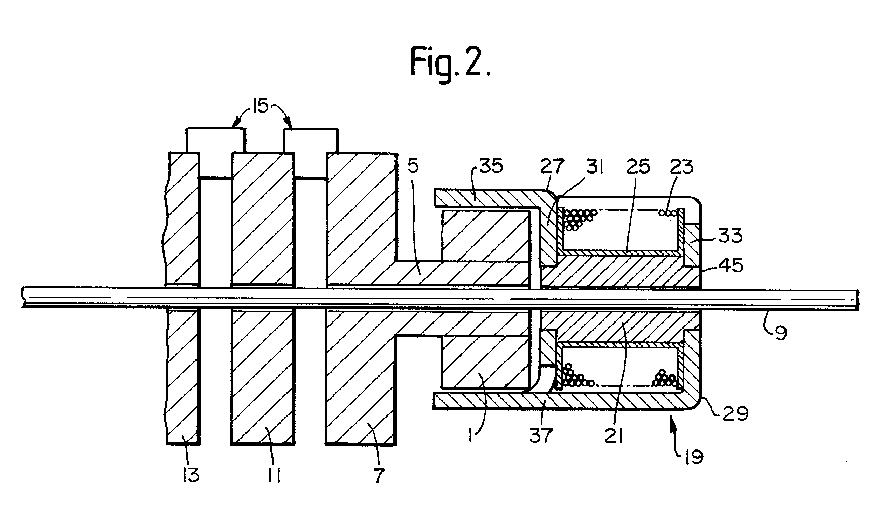

Referring to Figures 1 and 2, the motor has a cylindrical permanent magnet rotor 1 magnetised so as to have around its curved surface ten axially extending magnetic poles of successively opposite polarity disposed at equally angularly spaced positions around the rotor axis. The rotor 1 has a central axial aperture 3 by way of which it is mounted on an axial projection 5 of a units number wheel 7 of a cyclometer register driven by the motor. The number wheel 7 is in the form of a thin cylinder with the numbers '0' to '9' printed in numerical order on its curved surface and is associated with a display window (not shown) through which a tenth part arc only of the curved surface is visible. The wheel 7 is mounted for rotation on a shaft 9 (not shown in Figure 1) on which the other register number wheels, e.g. a tens and a hundreds wheel 11 and 13 are similarly mounted. Between each adjacent pair of the number wheels 7, 11 and 13 there are provided transfer gears 15 (not shown in Figure 1), so that when any wheel advances from a display of '9' to '0' the number displayed by the next most significant digit number wheel advances by one.

The motor further includes a stator 19 including an electromagnet comprising a tubular magnetic pole piece 21 secured on the shaft 9 on the side of the rotor 1 remote from the number wheels 7, 11 and 13, and a coil 23 wound on a bobbin 25 which fits coaxially on the pole piece 21.

The stator 19 further includes two pole piece members 27 and 29. Each pole piece member 27 or 29 is formed from sheet metal so as to have a centrally apertured portion 31 or 33 from which five arms 35 or 37 extend in directions parallel to the axis of the aperture 39 or 41 in its central portion at equally angular spaced positions around the axis. The two members 27 and 29 are identical except that the arms 35 of one member 27 are shorter than the arms 37 of the other member 29.

The pole piece member 27 with shorter arms 35 is mounted by way of its central aperture 39 on a boss 43 at the end of the pole piece 21 nearer the number wheels 7, 11, 13 so that its arms 35 extend axially alongside the rotor 1. The other pole piece member 29 is similarly mounted on a boss 45 at the other end of the pole piece 21 so that its arms 37 extend between the arms 35 of the member 25. The arms 35 and 37 of both members 27 and 29 terminate in a common plane just beyond the rotor 1.

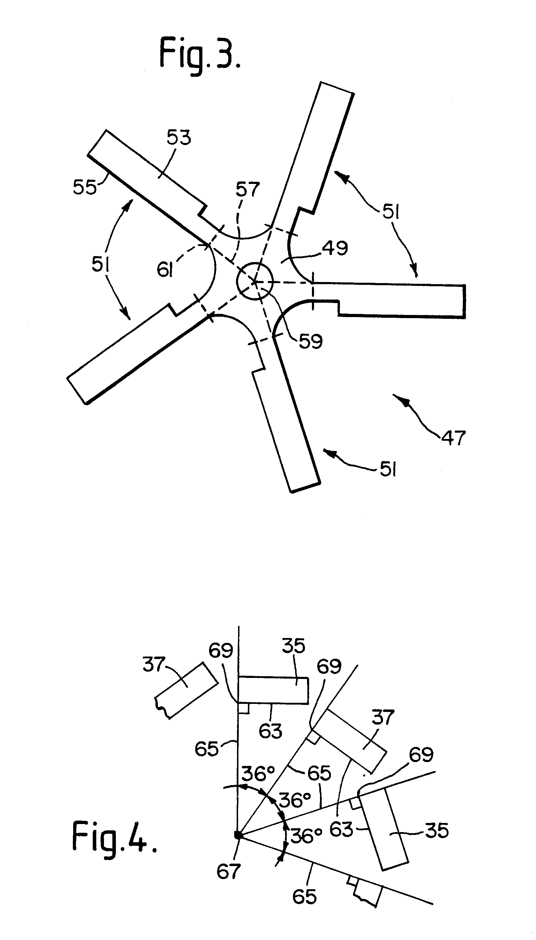

Referring now to Figure 3, the two members 27 and 29 are formed by first stamping out from sheet metal a member 47 having a centrally apertured central portion 49 from which five arms 51 of appropriate length extend radially outwards in equally angularly spaced directions. Each arm 51 is of elongated rectangular form over an outer portion 53 with one longer edge 55 of the outer portion 53 lying on a line 57 passing through the centre of the central aperture 59. To complete a member each arm 51 is bent through 90° along a line 61 at right angles to its longer edges at a position between its rectangular portion 53 and the central portion 49.

When mounted in the motor each of the arms 35 and 37 of the two members 27 and 29 presents a planar rectangular surface 63 skewed to the rotor 1. Thus each surface 63 lies in a plane normal to a respective one of ten radial planes 65 including the axis 67 of the rotor 1 spaced at 36°, and each surface 63 abuts the associated radial plane 65 along a longer edge 69, as illustrated in Figure 4. As will be apparent from Figure 4, the gap between the rotor 1 and the facing surface 63 of each arm 35 or 37 therefore increases in a given direction around the circumference of the rotor 1, i.e. the clockwise direction in Figure 4.

In operation of the motor, when the stator is energised by passing an electric current through the coil 23, a south magnetic pole is produced at one end of the stator pole piece 21 and a north magnetic pole at the other end. Hence the arms 35 of member 27 constitute poles pieces of one magnetic polarity and the arms 37 of the member 29 constitute pole pieces of the opposite magnetic polarity, and the rotor 1 takes up one of the ten possible stable positions (five for each direction of the stator energising current) in which each of its poles is positioned adjacent a respective stator pole piece of opposite polarity. If the direction of the stator energising current is then reversed, the rotor 1 moves through an angle of 36° in a direction dictated by the variation of the stator/rotor gap to reassume a stable position, and change the count displayed by the register by one.

It will be appreciated that the stable positions of the rotor 1 are where the gap between each rotor pole and the adjacent stator pole piece 35 or 37 of opposite polarity is a minimum, i.e. with each rotor pole positioned adjacent the end of the adjacent pole piece 35 or 37 nearest the rotor 1. Hence, on reversal of direction of the stator energising current, the rotor 1 will rotate in the direction of the nearer adjacent pole piece 35 or 37 i.e. the anti-clockwise direction in Figure 4.

It will be apparent that when the rotor 1 is in any stable is de-energised due to the rotor poles being attracted to the nearest points on the facing surfaces of the stator pole piece arms 35 and 37. Hence it is not necessary for the stator 19 to be energised continuously in operation. It is therefore only necessary for a pulse of energising current of appropriate polarity to be applied to the stator each time movement of the rotor through 36° is required.

It will be appreciated that the structural form of the electric stepper motor provided by the invention facilitates the production of motors which step through any desired even fraction of 360° without the use of gearing. A further advantage of motors according to the invention is that due to their compact construction, they are inherently less susceptible to interference by external magnetic fields than comparable known simple stepper motors. Furthermore, if it is required to reduce further the susceptibility to such interference, this may easily be achieved by a tubular magnetic shield around the pole pieces provided by the stator pole piece members.

One particular application of a stepper motor in accordance with the invention is for driving a cyclometer register in a meter for recording consumption of a commodity e.g. electrical energy.

**Claims**

1. An electric motor comprising a cylindrical rotor (1) mounted for rotation about its axis and permanently magnetised to provide equally angularly spaced magnetic poles around said axis of successively opposite polarity, and a stator (19) providing pole pieces (35, 37) around the rotor (1) at angular spacings corresponding to the angular spacings of said rotor poles, and arranged for energisation by an electric current so that the stator pole pieces (35, 37) are magnetised with successively opposite polarity, characterised in that each said stator pole piece (35, 37) has a surface (63) facing the rotor (1) whose spacing from the rotor (1) increases along said surface (63) in a given direction around the rotor axis.

2. A motor according to Claim 1 wherein each said pole piece (35, 37) has a planar surface (63) facing the rotor (1) which surface (63) lies wholly on one side of, and is substantially normal to, a respective plane (65) including said axis.

3. A motor according to Claim 2 wherein said planar surface (63) of each said pole piece (35, 37) is of rectangular form with a longer edge (69) abutting said respective plane (65).

4. A motor according to any one of the preceding Claims wherein the stator (19) comprises an electromagnet (21, 23, 25) which provides, when energised, magnetic poles of opposite polarity at spaced positions along an extension of the axis of the rotor (1), and a pair of pole piece members (27, 29) respectively associated with said poles provided by the electromagnet, each said member (27, 29) providing a plurality of pole pieces (35, 37) extending axially alongside the rotor (1) at equally angularly spaced positions with the pole pieces (35) of one member (27) interdigitated with the pole pieces (37) of the other member (29).

5. A motor according to Claim 4 wherein each said pole piece member (27 or 29) comprises a central portion (31 or 33) positioned adjacent a respective one of said poles of said electromagnet (21, 23, 25) and a plurality of arms (35 or 37) which extend from said central portion (31 or 33), said arms (35, 37) constituting said pole pieces (35, 37).

6. A motor according to Claim 5 wherein said electromagnet (21, 23, 25) comprises a coil (23) wound around a cylindrical pole piece (21) disposed coaxially with said axis of the rotor (1), said poles of the electromagnet being produced at opposite ends of said cylindrical pole piece (21).

7. A motor according to Claim 6 wherein a boss (43, 45) is provided at each end of said cylindrical pole piece (21), each of which bosses (43, 45) fits into an aperture (39, 41) in the central portion (31 or 33) of a respective one of said pole piece members (27, 29).

8. A motor according to any one of the preceding claims in combination with a cyclometer digital register (7, 11, 13), the rotor (1) of the motor being arranged to drive directly the least significant digit wheel (7) of the register (7, 11, 13).

# Fig.1.

Fig.2.

0265195

# Fig.3.

# Fig.4.